Europäisches Patentamt

European Patent Office

Office européen des brevets

(19)

(11) Publication number: **0 023 012**
**B1**

(12) **EUROPEAN PATENT SPECIFICATION**

(45) Date of publication of patent specification: **30.05.84**

(21) Application number: **80104100.5**

(22) Date of filing: **15.07.80**

(51) Int. Cl.³: **E 21 B 33/035,** E 21 B 34/16,
F 15 B 15/08, F 15 B 13/07,
F 16 K 31/528, F 16 K 31/124,
F 16 K 11/07

(54) **Apparatus for the remote control of oil or gas wells.**

(30) Priority: **21.07.79 GB 7925529**
**07.12.79 US 101993**

(43) Date of publication of application:
**28.01.81 Bulletin 81/04**

(45) Publication of the grant of the patent:
**30.05.84 Bulletin 84/22**

(84) Designated Contracting States:
**DE FR IT**

(56) References cited:
**FR-A-2 399 564**
**GB-A-1 159 745**
**US-A-3 933 100**
**US-A-4 036 247**

(73) Proprietor: **FMC CORPORATION**
**200 E. Randolph Drive**
**Chicago Illinois 60601 (US)**

(72) Inventor: **Milberger, Lionel John**
**19402 Enchanted Oaks**
**Spring Texas (US)**

(74) Representative: **Taylor, Derek George et al**
**Mathisen, Macara & Co. Lyon House Lyon Road**
**Harrow, Middlesex HA1 2ET (GB)**

Courier Press, Leamington Spa, England.

## Description

This invention relates to apparatus for hydraulic control of a subsea device, and more particularly to hydraulic apparatus for the remote control of a plurality of subsea devices requiring only a small number of hydraulic pressure source lines from a surface vessel to the sea floor.

The production of oil and gas from offshore wells has developed into a major endeavor of the petroleum industry. Wells are commonly drilled several hundred or even several thousand feet below the surface of the ocean, substantially below the depth at which divers can work efficiently. As a result, the drilling and operating of a subsea well must be controlled from a surface vessel or from an offshore platform. The testing, production and shutting down of the subsea well is regulated by a subsea christmas tree which is positioned on top of the subsea wellhead. The christmas tree includes a plurality of valves having operators which are biased to a non-active position by spring returns, and it has been found convenient to actuate these operators by hydraulic fluid which is directly controlled from a surface vessel. For this purpose, a plurality of hydraulic lines are commonly run from the surface vessel to the wellhead to open and close these valves, and to actuate other devices in the well and the wellhead during installation, testing and fluid production through the subsea well equipment, and also during workover procedures being performed on the well.

It is known from FR—A—2,399,564 to provide apparatus for the remote control of a plurality of hydraulically operated subsea operators in a predetermined sequence of operation by a small number of hydraulic lines between a surface control centre and a subsea device containing said operators, said apparatus comprising a plurality of valve means having rotatable valve sections and a valve actuator for rotating said sections and sequentially connecting said hydraulic lines to said operators. This prior art forms the base of the first part of claim 1.

The present invention seeks to improve the above mentioned apparatus by said valve actuator having an axially movable input member and a rotatable output member, said output member rotatable by said input member to a plurality of distinct operating positions; means for moving said output member in a first rotational direction (clockwise or counter-clockwise) in response to an axial movement of said input member, said output member stopping at at least two (for example 60 degrees clockwise and 60 degrees counter-clockwise) of said operating positions; means for moving said output member in a second rotational direction (counter-clockwise or clockwise) in response to an axial movement of said input member, said output member stopping at at least two (for example 60 degrees counter-clockwise and 60 degrees clockwise) of said operating positions; means for automatically reversing the direction of rotation of said output member when said output member has moved through a predetermined number of said operating positions; means for incrementing said output member by one of said plurality of distinct operating positions in response to axial movement of said input member; means for coupling each of said valve sections to said output member; and a position indicator for indicating the operating positions of said output member.

Further embodiments of the apparatus are defined in claims 2—7.

Attention is directed to our co-pending european patent application 81 302 309.0 which has been divided from the present application and describes and claims certain features of the rotary actuator of the present invention.

The invention will now be described by way of example with reference to the accompanying drawings in which:—

Figure 1 is a schematic diagram of a switching control and valve circuitry of a subsea production system in which apparatus according to the present invention is used.

Figure 2 is a diagrammatic side elevation, with portions broken away, of a valve and valve actuator according to the present invention.

Figure 3 is a central vertical section of a valve section according to the present invention showing the means for connection to an adjacent valve section and to a valve actuator.

Figure 4 is a view of the valve section taken in the direction of the arrows 4—4 of Figure 3.

Figure 5 is a view of the valve section taken in the direction of the arrows 5—5 of Figure 3.

Figure 6 is a plan view of a rotor used in the valve section of Figure 3.

Figure 7 is a schematic diagram of the valve section of Figure 3 with the rotor of Figure 6.

Figures 8A and 8B illustrate the physical configuration, and the operation characteristics of a plurality of types of valve rotors according to the present invention.

Figure 9 is a central vertical section of the valve actuator of Figure 2.

Figure 10 is a diagrammatic isometric view, partly in section and with portions broken away, of a valve actuator according to the present invention.

Figure 11 is a horizontal section taken along the line 11—11 of Figure 9.

Figure 12 is a horizontal section taken along the line 12—12 of Figure 9.

Figure 13 comprises a table which illustrates the steps of operation of a subsea christmas tree and of its flow control valves.

Figures 14 and 15 are additional embodiments of the hydraulic circuitry which can be used to control operation of subsea valves.

Figure 16 is another embodiment of a valve section which can be used in the present invention.

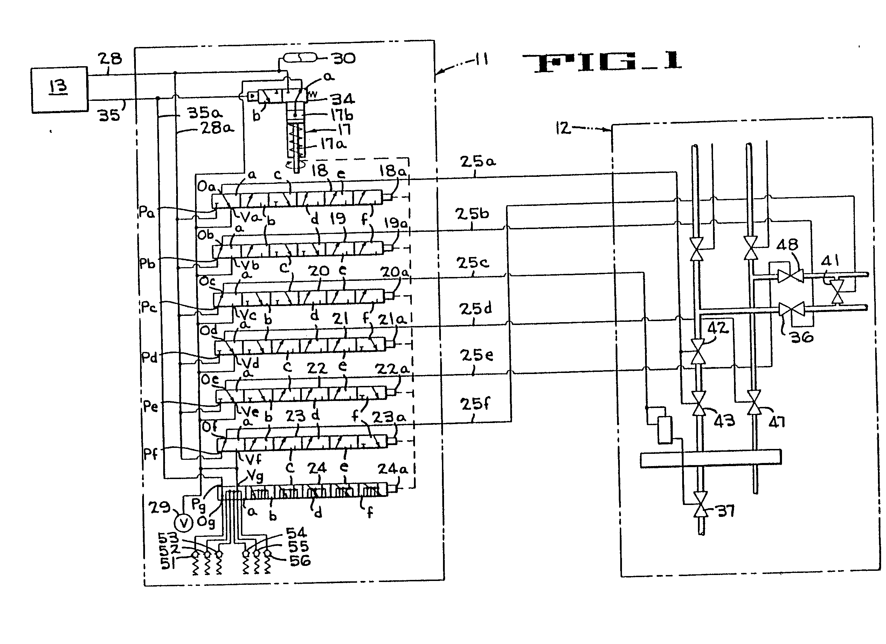

Figure 1 diagrammatically illustrates hydraulic apparatus for controlling a plurality of valves or other subsea operators while using only a pair of hydraulic pressure source lines. The present invention as illustrated in Figure 1 includes a control module 11 for use with a subsea christmas tree 12 having a plurality of hydraulically controlled valves with their associated valve operators. The control module 11 is connected to a surface control center 13 having the usual pressure pumps, pressure gauges and switches, none of which is shown. The control module 11 includes a rotary actuator 17 connected to a rotary switch having a plurality of rotatable valve sections 18—24 each having a pressure input Pa—Pg, an output Oa—Og, and a vent Va—Vg. Each valve section includes a plurality of positions a—f each having either the pressure input connected to the output or having the output connected to the vent. Each of the pressure inputs Pa—Pg is connected to the hydraulic supply line 28 which is provided with pressurized fluid from the control center 13, and each of the vents Va—Vg is connected to a vent 29 which is vented into the sea. An accumulator 30, which is connected to the hydraulic supply line 28, aids in providing a stabilized value of hydraulic pressure to the valve sections 18—24 and to operate the actuator 17 through a pilot valve 34. The rotary actuator 17 includes a rotatable shaft 17a which is coupled to a plurality of rotatable shafts 18a—24a of the valve sections 18—24.

When a hydraulic pilot line 35 is unpressurized the pilot valve 34 is in the position shown in Figure 1 wherein upper chamber 17b of the actuator 17 is connected to the vent 29 through the valve section a, whereby the actuator shaft 17a and the valve sections 18—24 remain in a stationary position. When pressure is admitted to the hydraulic pilot line 35 the spool of the valve 34 shifts so that liquid from the hydraulic supply line 28 is coupled through the section b of the pilot valve 34 to the upper chamber 17b, causing the actuator 17 to rotate the valve sections 18—24 to another distinct position. When the valves 18—24 are in the positions shown in Figure 1, hydraulic pressure from the hydraulic supply line 28 is coupled through portion a of valve 19 through a hydraulic line 25b to a production wing valve 36, causing the wing valve to open. Hydraulic fluid coupled through portion a of valve 20 and portion a of valve 23 through hydraulic lines 25c, 25f also causes a downhole safety valve 37 and a crossover valve 41 to open. An upper master valve 42 and a lower master valve 43 are connected to vent 29 through hydraulic line 25a and the portion a of valve 18, and an annulus master valve 47 and an annulus wing valve 48 are connected to the vent 29 by lines 25d, 25e through the portions a of valve sections 21 and 22, respectively.

The lowermost valve 24 and a plurality of pressure relief valves 51—56 provide a predetermined upper value of pressure on the pilot line 35 at the control center to indicate the position of the valve 24, thereby also indicating the position of the rotary actuator 17 and of the other valves 18—23. For example, when all the valves are in their "a" positions, the pressure relief valve 51 is connected through a portion "a" of valve 24 to the pilot line 35 and limits the maximum pressure on the pilot line to 1000 psi (6900 kPa). When the valves are all in their "b" positions the pressure relief valve 52 limits the pressure on the pilot line 35 to 1400 psi (9660 kPa), thereby indicating that the valves and the actuator are in said "b" positions.

Figures 14 and 15 disclose other embodiments of circuits for interconnecting the actuator pilot valve 34, the actuator 17 and the valve sections. In Figure 14 the position signal line 35a is connected to the supply line 28 through the portion b of the pilot valve 34 so that the pressure on line 28 can be used to determine the rotary position of the valve section 18—24 during the time when the pilot valve 34 is energized. When the pilot valve 34 is deenergized the signal line 35a is connected to the vent 29. The hydraulic supply line 28 is always connected to the valve section just as shown in Figure 1.

The hydraulic supply line 28 of Figure 15 is connected to a feed line 28a when the pilot valve 34 is deenergized. When the pilot line 35 of Figure 15 is energized the supply line 28 is disconnected from the feedline 28a thereby allowing the rotary position of the valves to be indicated by the pressure on line 28 and disconnecting the christmas tree valves until the pilot valve 34 is again deenergized.

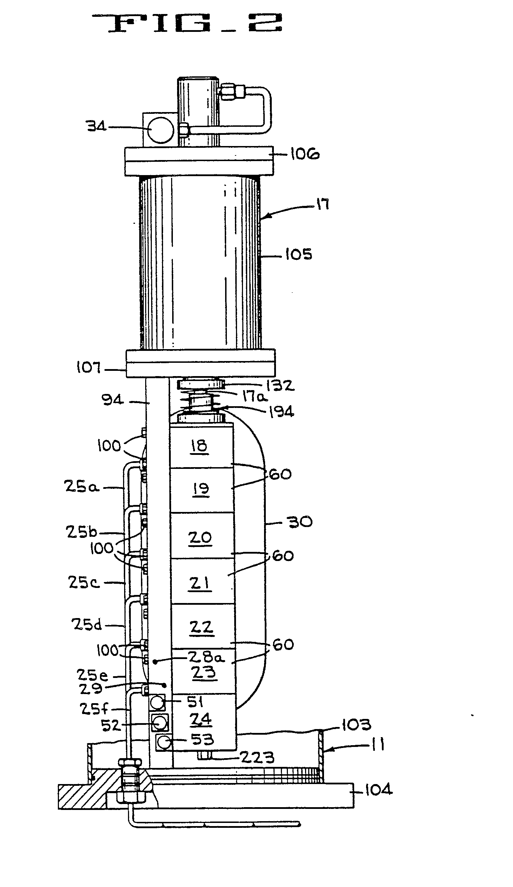

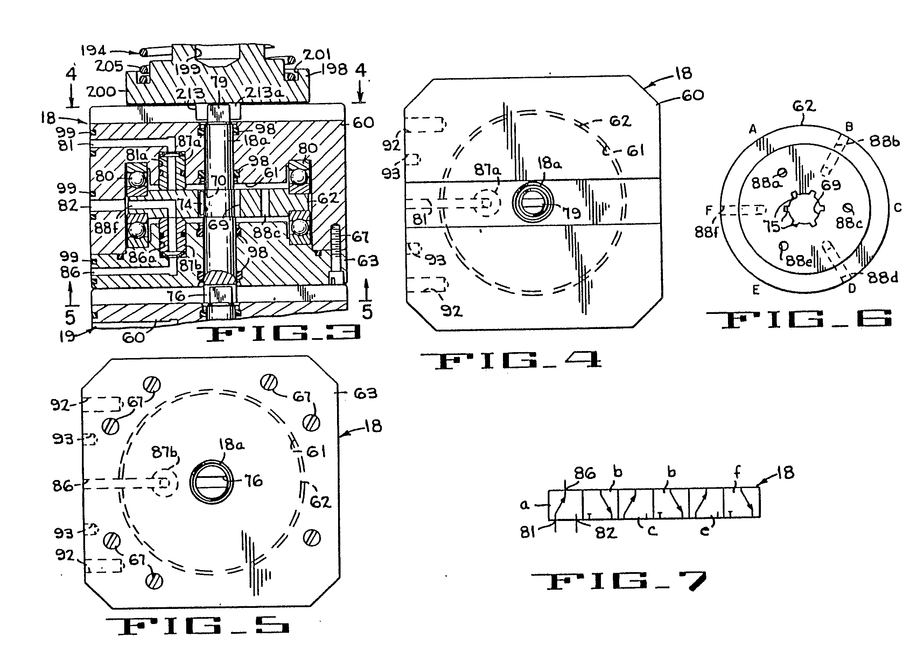

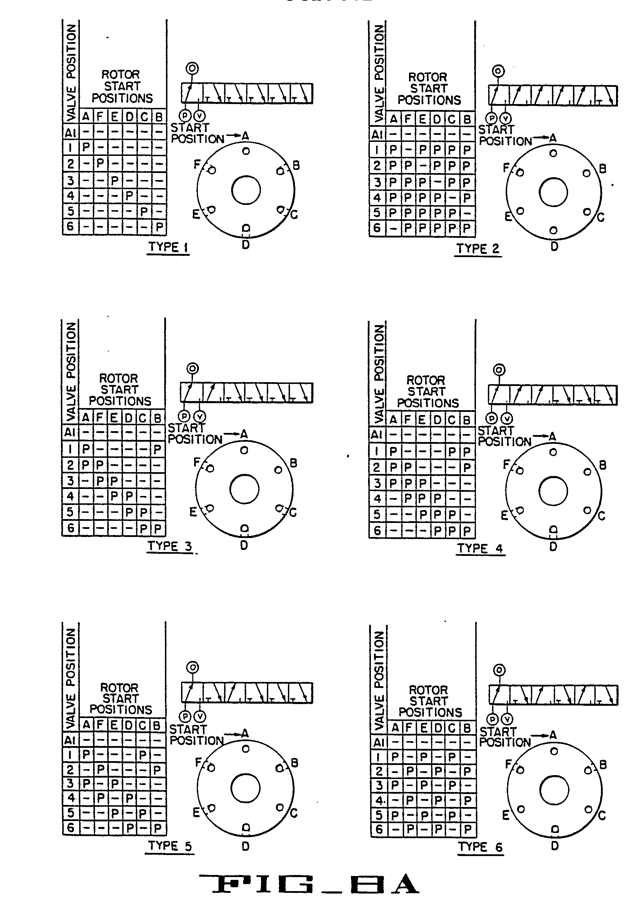

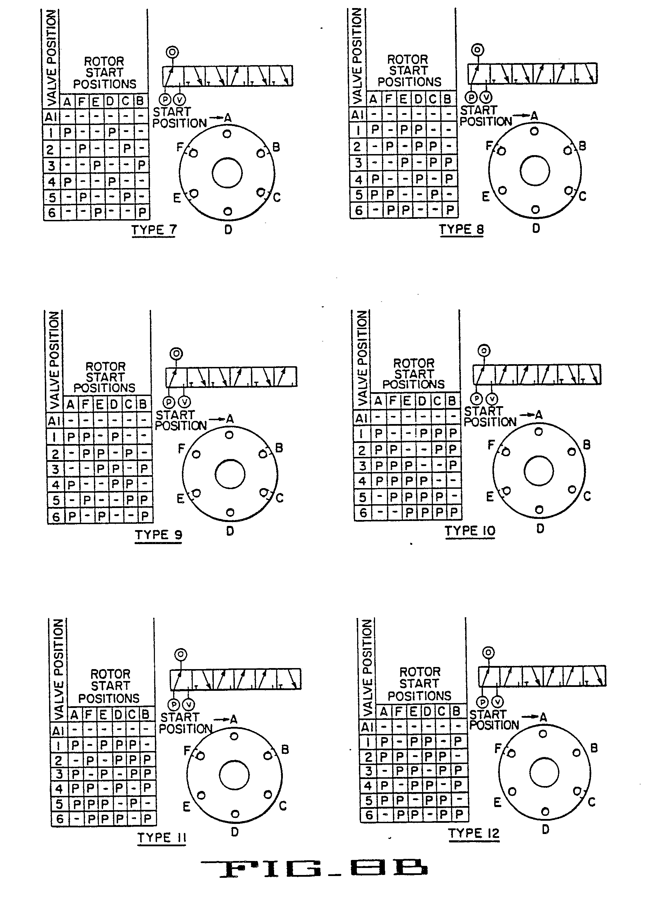

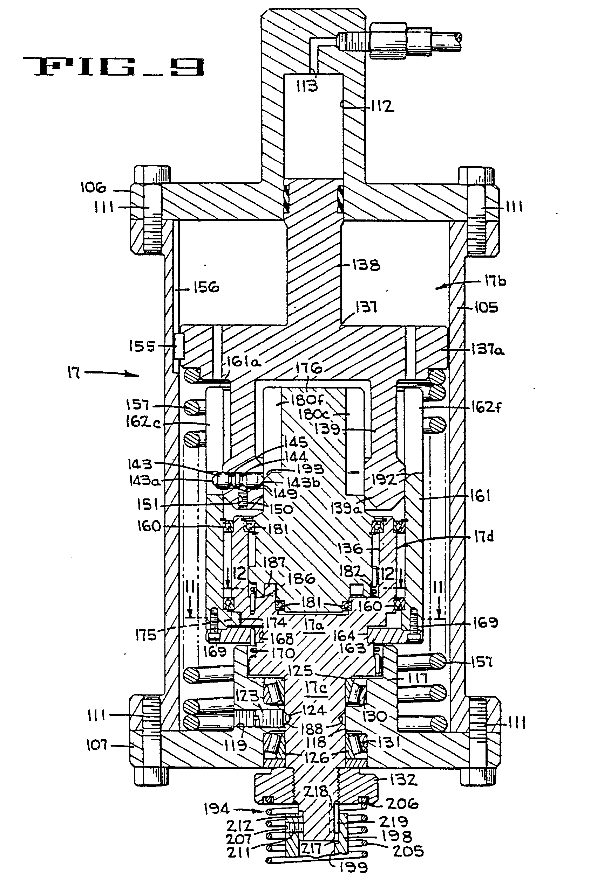

The valve sections 18—24 are individually removable units which can be stacked in an end-to-end manner as shown in Figure 2, with the shaft 17a of the actuator 17 connected to the shaft 18a of the uppermost valve section 18, and with each of the other valve sections having a shaft connected to the shaft of the valve section positioned immediately above it. Each of the valve sections includes a body 60 (Fig. 3) having a generally cylindrical chamber 61, with a generally disc shaped rotor 62 mounted therein and a cover 63 connected to the body 60 by a plurality of cap screws 67. The rotor 62 is rotatably mounted in the chamber 61 by the shaft 18a which is pressed into a bore 69 in the rotor (Figs. 3, 6). The rotor is connected to the shaft and retained in any one of six positions (Fig. 6) thereon by a key 70 (Fig. 3) which resides partially in a slot 74 in the shaft, and partially in any one of the six slots 75 in the rotor 62. One end of the shaft 18a includes a female slot 76 (Fig. 5), and the other shaft end includes a mating male projection 79 (Fig. 4). When the valve sections are stacked, the male projection 79 on the upper end of one shaft fits into the female slot 76 on the lower end of an adjacent valve section to interconnect the sections for unitary rotation of theirs shafts and rotors.

A plurality of ball or other suitable bearings 80, mounted between the rotor 62, the body and the cover 63, relieve strain at the connection between the shaft and the rotor. The valve section (Fig. 3) includes a right angle pressure port 81 and a vent port 82 drilled radially in the body, and a right angle outlet port 86 in the cover 63. A pair of shear seals 87a, 87b are mounted in an enlarged portion 81a, 86a of the ports 81, 86 to provide a fluid-tight seal between the ports and the rotor.

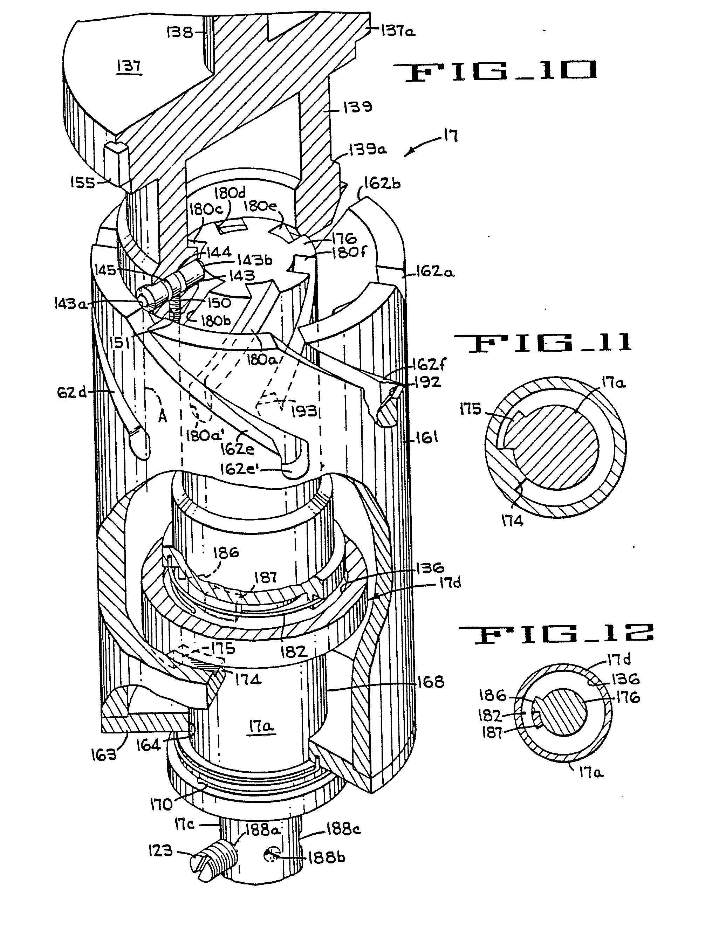

The rotor 62 (Figs. 3, 6) includes a plurality of holes 88a—88f drilled in either a straight-line pattern or a right angle pattern. When any one of the right angle holes 88b, 88d and 88f are rotated adjacent the shear seals 87a, 87b the outlet port 86 is connected to the vent port 82 as shown in Figure 3. When any one of the straight line holes 88a, 88c and 88e are rotated adjacent the shear seals the pressure port 81 is connected directly to the outlet port 86. The drilling pattern of the rotor shown in Fig. 6 is shown schematically in Fig. 7.

A plurality of threaded mounting bores 92 (Figs. 4, 5) and a plurality of dowel pin holes 93 facilitate mounting the valve sections to a manifold 94 (Fig. 2). A plurality of seals 98 provide sealing around the shaft 18a, and a plurality of seals 99 provide fluid tight connections between the pressure ports 81, and vent port 82, the outlet port 86 and the connections on the manifold 94. A seal 101 provides a fluid-tight connection between the body 60 and the cover 63.

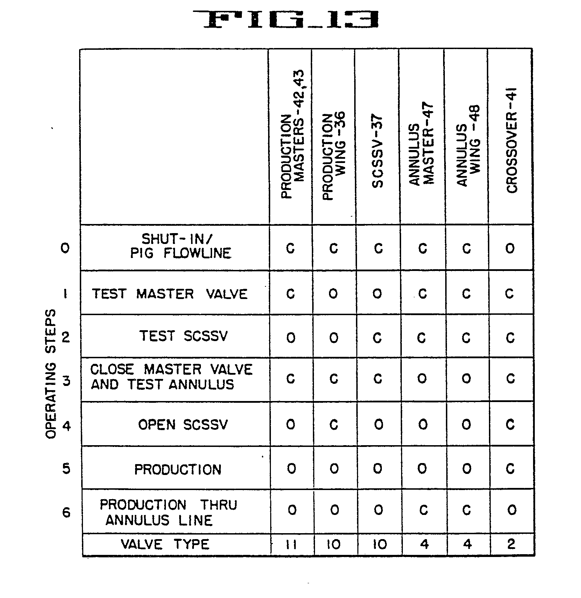

In order to control a plurality of subsea valves in a desired sequence it may be necessary to provide a unique pattern of straight-through and right angle holes for the rotors of each of the valve sections. For example, to control the subsea tree 12 of Fig. 1 the sequence of operation shown in the matrix of Figure 13 may be used. In the shut-in position, with the supply line 28 and the pilot line 35 unpressurized, the crossover valve 41 (Fig. 1) is open, as represented by the letter O (Fig. 13), and all the other valves are closed, as represented by the letter C. In the example shown in Fig. 13, the valves 42, 43 are closed in steps 0, 1 and 3, and are open in steps 2 and 4—6. This requires a rotor with the pattern of straight-through and angular holes shown in type No. 11 of Fig. 8B, and with the rotor starting in the F position in order to provide pressure to the valves 42, 43 in steps 2 and 4—6. This can be done by positioning and locking the rotor 62 on the shaft 18a (Figs. 3, 6), with the right angle hole F at the shaft's No. 1 position. A type 10 valve rotor (Fig. 8B) with the right angle hole E at the No. 1 shaft position, is required to control the valve 36. Proper positioning of the twelve rotor types of Figs. 8A and 8B with respect to the actuator drive shaft facilitates operation of the tree 12 in a six-step manner, and also all possible combinations of sequences of operations of the valves. Other combinations, and/or specially drilled rotors, are not required when the twelve basic rotor types shown in Figs. 8A and 8B are used. In a system where a different number of steps of operation are required, a different number of holes can be spaced around the rotor, and the rotors rotated a different number of degrees as each step of the operation is carried out.

The manifold 94 (Fig. 2) is mounted on a base plate 104, and includes a plurality of internal passageways (not shown) which connect the ports 81, 82, 86 of the valve sections 18—23 to the various hydraulic lines, such as the supply line 28, pilot line 35 and output lines 25a—25f of Figure 1, and connect the pressure relief valves 51—56 to the valve section 24. The valve sections 18—24 (Fig. 2) are secured to the manifold 94 by a plurality of cap screws 100 which are threaded into bores 92 (Figs. 4, 5) in the valve bodies 60. The actuator 17 is fixed to the upper end of the manifold 94. A housing 103, sealed to the base plate 104 by a seal 108, provides fluid-tight protection to the actuator 17 and valve assembly.

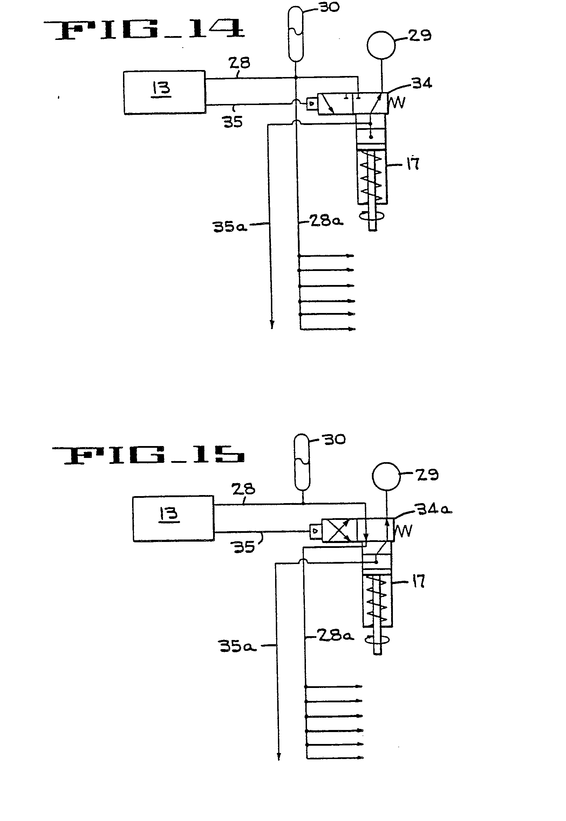

The actuator 17 (Figs. 9—12) includes a generally cylindrical tubular housing 105 having a pair of end plates 106, 107 connected thereto by a plurality of cap screws 111. The upper end plate 106 includes an axially extending fluid chamber 112 and a right angle port 113 extending between the upper end (Fig. 9) of the fluid chamber and a hydraulic line 109. The lower end plate 107 includes an axial flange 117 and an axial bore 118 extending through the center of the end plate. A spring loaded detent 123, having a ball-shaped portion 124 at the radial inner end thereof, resides in a radial hole 119.

The cylindrical actuator shaft 17a includes a lower portion 17c mounted in the axial bore 118. A pair of roller bearing assemblies 125, 126 mounted in a pair of recesses 130, 131 of the lower end plate 107, rotatably mount the shaft to the lower end plate. The lower portion of the actuator shaft is threaded to a nut 132. The shaft 17a includes an enlarge upper portion 17d having an axially extending bore 136.

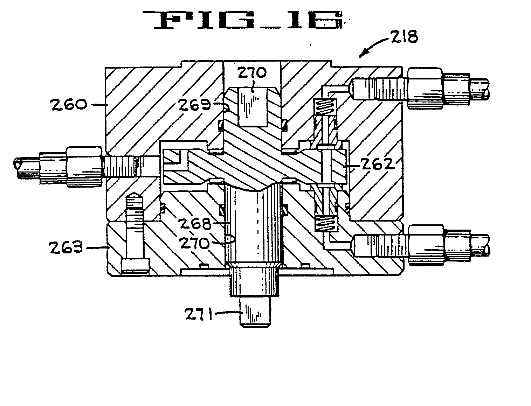

An axially movable plunger 137 (Figs. 9, 10) is located in the upper end of the housing 105, and this plunger includes a piston 138 extending upwardly into the fluid chamber 112 of the upper end plate 106, and a radial flange 137a extending to the wall of the housing 105. The lower portion of the plunger 137 includes a sleeve 139 having a radially expanded portion 139a. A cylindrical pin 143, having a pair of circumferentially extending grooves 144, 145, is mounted in a radial bore 149 in the expanded sleeve 139a. A spring detent 150 (Figs. 9, 10), mounted in a radial bore 151 (Fig. 9), intersects the pin 143 and rests in one of the grooves 144, 145. A key 155 (Figs. 9, 10), connected to the plunger 137 and riding in an axial slot 156 in the housing 105, prevents rotational movement of the plunger 137 but allows vertical movement thereof relative to the housing. A coil spring 157 (Fig. 9), connected between the lower end plate 107 and the radial flange 137a, biases the plunger in an upward direction, so that in the absence of hydraulic pressure on the upper end of the piston 138 the plunger flange 137a moves upward to rest against the upper end plate 106.

A hollow cylindrical outer cam 161 (Figs. 9, 10), having six angular slots 162a—162e (only five shown) spaced about the upper portion thereof, is rotatably mounted around the upper portion 17c of the actuator shaft 17a by a plurality of bearings 160. The outer cam also includes an additional angled slot which is not shown due to the problem of cluttering the drawings with too many details. A plate 163, having an axial bore 164, is mounted in an annular groove 168 (Fig. 9) in the shaft 17a and secured to the outer cam by a plurality of cap screws 169. The lower portion of the diagrammatic drawing of Figure 10 has been stretched to better show other details, so the groove 168 in Figure 10 appears to be much wider than the same groove as shown in the sectional view of Figure 9. A torsion spring 170 (Figs. 9, 10) is connected between the shaft 17a and the outer cam 161 to bias a radial inward cam lug 174 (Figs. 10, 11) toward a radial outward shaft lug 175. The rotation of outer cam 161 about the shaft 17a is limited to an arc of less than 360 degrees by the lugs 174, 175.

A cylindrical inner cam 176 (Figs. 9, 10, 12), having a plurality of angular slots 180a—180f spaced about the upper· portion (Fig. 10) thereof, is rotatably mounted in the axial bore 136 of the shaft 17a by a plurality of bearings 181. The slots 180a—180f (Fig. 10) are angled clockwise as they extend downward from the top of the inner cam 176, in contrast to the slots 162a—162e of the outer cam 161 which are angled counter-clockwise as they extend downward. A torsion spring 182 (Figs. 9, 10) is connected between the shaft 17a and the inner cam 176 to bias a radial outward cam lug 186 (Figs. 10, 12) toward a radial inward shaft lug 187.

The actuator shaft 17a is normally retained in one of six rotary positions by the detent 123 (Figs. 9, 10) extending into one of a plurality of shallow bores 188 in the lower portion 17c of the shaft 17a. As stated above, the number of rotary positions of the shaft and of the valve sections can be changed to a greater or lesser number as required. When the fluid chamber 112 (Fig. 9) is unpressurized the plunger 137 is biased to the upper end of the housing 105 with the pin 143 slightly above the upper end 161a of the outer cam 161, and with one end of the pin 143 (Fig. 10) radially above the open end of one of the outer cam slots 162a—162e and the other end of the pin 143 radially above and axially outwardly of the open end of one of the inner cam slots 180a—180f.

When the pin or cam follower 143 (Fig. 10) is positioned radially outward with the outward end 143 immediately above the open end of one of the outer cam slots 162a—162e, the detent 150 is positioned in the groove 144 to retain the pin in the outer cam slot. When pressurized fluid is admitted through the port 113 to the fluid chamber 112, the plunger 137 (Figs. 9, 10) is moved axially downward forcing the pin 143 downward in the adjacent slot, with the pin moving along the axially extending line A (Fig. 10), as the plunger is prevented from rotating by the key 155 in the slot 156 (Fig. 9). For example, when the pin 143 moves down into the slot 162e, the pin 143 progresses downward along the line A until it reaches the lower end 162e' of the slot causing the outer cam 161 to rotate 60 degrees clockwise (as viewed from above the actuator). Clockwise rotation of the cam 161 and the cam lug 174 causes the shaft lug 175 (Fig. 11) and the shaft 17a to rotate 60 degrees clockwise and for the detent 123 to move from bore 188a (Fig. 10) into the adjacent detent bore 188b.

When pressure is released from the chamber 112 (Fig. 9) the plunger 137 is forced upward by the coil spring 157, moving the pin 143 (Fig. 10) upward along the line A, in the slot 162e and rotating the outer cam 60 degrees counter-clockwise. The shaft 17a is prevented from rotating by the detent 123 in the bore 188b and the lam lug 174 (Fig. 11) is rotated counter-clockwise away from shaft lug 175. The counter-clockwise rotation of the outer cam 161 "winds" the torsion spring 170 (Figs. 9, 10) to bias the outer cam lug 174 more strongly toward the shaft lug 175. When the pin 143 moves out of the open end of the slot 162e the spring 170 causes the cam 161 to quickly rotate 60 degrees clockwise, with the upper end of the cam slot 162f stopping adjacent the pin 143, as the outer cam lug 174 contacts the shaft lug 175. This same sequence is repeated each time the plunger moves down and returns to the upper position, with the outer cam and shaft rotating 60 degrees clockwise as the pin 143 moves down to the bottom of a cam slot, the shaft is stopped and held in place by the detent 123 while the pin moves upward, rotates the outer cam counter-clockwise and winds up the tension spring. When the pin 143 moves above the outer cam the cam snaps around clockwise with the pin adjacent another open end of another slot. This causes the shaft to rotate in increments between six distinct stopping points.

When the pin 143 reaches the lower end of the last cam slot 162f the radial outer end of the pin is pressed against a bevelled surface 192 (Figs. 9, 10) causing the pin 143 to move radially inward with the end 143b of the pin in the lower end 180a' of the cam slot 180a in the inner cam 176. The detent 150 moves into the groove 145 of the pin to retain the pin in the slot 180a as the pin 143 and the plunger 137 move upward. Each time the plunger moves downward the pin 143 moves downward in one of the inner cam slots 180a—180f, with the pin moving along a line parallel to line A (Fig. 10) causing the inner cam 176 to rotate counter-clockwise 60 degrees. The radial outward lug 186 on the inner cam 176 presses against the radial inward lug 187 on the shaft 17a (Fig. 12) causing the shaft 17a to rotate counter-clockwise and to move the detent 123 (Fig. 10) into an adjacent bore 188f—188a (only part of which are shown) on the shaft 17a. An upward movement of the plunger 137 and the pin 143 causes the inner cam 176 (Fig. 12) to relate clockwise to move the lug 186 away from the lug 187 and "wind" the torsion spring 182 (Figs. 10, 12) to bias the inner cam lug 186 more strongly toward the shaft lug 187. When the pin 143 moves upward, out of the open end of one of the slots 180a—180f, the torsion spring 182 causes the cam 176 to quickly rotate 60 degrees counter-clockwise with the upper end of the next cam slot stopping adjacent the pin 143, as the inner cam lug 186 contacts the shaft lug 187. Repeating the sequence causes the shaft 17a to rotate counter-clockwise in increments between each of six distinct stopping points.

When the pin 143 reaches the lower end of the last cam slot 180f (Figs. 9, 10) the radial inner end 143b of the pin is pressed against a bevelled surface 193 causing the pin 143 to move radially outward into the lower end of the cam slot 162a and to again reverse the direction of rotation of the actuator shaft whenever the plunger 137 is moved downward. The shaft rotates through six positions in one direction, then automatically reverses the direction of rotation, and moves in reverse order through the same six position. This process is automatically repeated as long the plunger moves down and back up.

The actuator 17 is connected to the stacked valve sections 18—24 by a spring loaded coupling means 194 (Figs. 2, 3, 9) comprising a generally cylindrical coupler 198 having an axial bore 199 extending downward through a portion of the coupler. A radial flange portion 200 includes an annular groove 201 (Fig. 3) with one end of a compression spring 205 mounted in the groove 201 and the other end of the spring connected to an annular groove 206 in the nut 132 (Fig. 9) to bias the coupler 198 toward the valve section 18 (Fig. 2). The coupler 198 is secured to the lower end 17c of the actuator shaft 17a (Fig. 9) by a set screw 207 mounted in a radial threaded hole 211 in the coupler and with the radial inner end of the set screw extending into an axial slot 212 in the shaft 17a. The slot 212 and set screw 207 allow the coupler 198 to travel axially along the shaft 17a through a distance determined by the vertical length of the slot 212. The lower end of the coupler includes a shaft 213 (Fig. 3) having a radial slot 213a to receive the rectangular projection 79 on the upper end of the valve shaft 18a (Figs. 3, 4) and to secure the shaft 18a of the upper valve section 18 to the shafts 213 and 17a. A slot 217 in the upper portion of the coupler 198 and a slot 218 in the lower end of the actuator shaft 17a (Fig. 9) contain a key 218 which couple rotational motion from the shaft 17a to the coupler 198.

The purpose of the coupling means 194 is to couple the actuator shaft 17a to the shaft 18a of the valve sections 18—24 during normal operation of the actuator 17. If the actuator should fail, the coupler 198 (Fig. 2) can be pried upward from the valve section 18 by an appropriate tool until the shaft 213 (Fig. 2) of the coupler is disconnected from the shaft 18a of the upper valve section. A nut 223 (Fig. 2) extending from the lower end of the valve 24 and connected to the valve shaft 24a can be turned by an appropriate wrench to rotate the shaft 24a and temporarily operate the valves 18—24.

Another embodiment 218 of the valve sections 18—24 (Fig. 2) is disclosed in Figure 16 with most of the elements functioning in a manner similar to the embodiment shown in Figures 3—6. However, a rotor 262 and a shaft 268 are fixed together and the rotor cannot be removed and positioned in a different rotary position on the shaft as in the valve section of Figure 3. The rotor 262 is supported by the shaft 268 which rotates in a bore 269 in the valve body 260 and in a bore 270 in a cover 263. The upper end of the shaft 262 includes a square hole 270 and a square shaft end 271 on the other end. Several of the valve sections 218 can be stacked with the square end 271 of one valve shaft fitting into the square hole 270 in the shaft of an adjacent valve section. These stacked valve sections 218 can be connected to a single actuator as shown in Figure 2, but individual sections cannot be removed or replaced without disconnecting the sections mounted below the section being removed.

The present invention discloses apparatus for remote control of a relatively large number of hydraulically-operated subsea operators using only two hydraulic lines between a surface control center and a subsea device containing the operators. A valve actuator having a rotatable shaft or other output member which is movable to a plurality of distinct operating positions is coupled to a plurality of rotatable valve sections of a rotatable valve which are used to control the subsea operators. The valve actuator includes means for automatically reversing the direction of movement, so the rotatable valve sections are moved in a first direction through a sequence of distinct positions and then moved in a reverse direction through the same distinct positions.

Although the best mode contemplated for carrying out the present invention has been herein shown and described, it will be apparent that modification and variation may be made without departing from what is regarded to be the subject matter of the invention as defined in the appended claims.

## Claims

1. Apparatus for the remote control of a plurality of hydraulically operated subsea operators (36, 37, 41—43, 48) In a predetermined sequence of operation by a small number of hydraulic lines (28, 35) between a surface control centre (13) and a subsea device (12) containing said operators, said apparatus comprising a plurality of valve means (18—24) having rotatable valve sections (62) and a valve actuator (17) for rotating said sections and sequentially connecting said hydraulic lines to said operators, characterised by said valve actuator (17) having an axially movable input member (137, 143) and a rotatable output member (161, 17a or 176, 17a) said output member rotatable by said input member to a plurality of distinct operating positions (a—f or f—a); means (112, 138, 143a, 162a—f, 174, 175 or 137a, 157) for moving said output member (161, 17a) in a first rotational direction (clockwise or counter-clockwise) in reponse to an axial movement (A) of said input member (137, 143a), said output member (161, 17a) stopping at at least two (for example 60 degrees clockwise and 60 degress counter-clockwise) of said operating positions (a—f); means (112, 138, 143b, 180a—f, 186, 187 or 137a, 157) for moving said output member (176, 17a) in a second rotational direction (counter-clockwise or clockwise) in response to an axial movement (A) of said input member (137, 143b), said output member (176, 17a) stopping at at least two (for example 60 degrees counter-clockwise and 60 degrees clockwise) of said operating positions (f—a); means (192, 145, 150, 144, 193) for automatically reversing the direction of rotation of said output member (161, 17a or 176, 17a) when said output member has moved through a predetermined number of said operating positions; means (170, 123, 188a—e, 175 or 182, 123, 188e—a, 186, 187) for incrementing said output member by one of said plurality of distinct operating positions in response to axial movement (A) of said input member (137, 143a or 137, 143b); means (194, 18a, 213, 213a, 79, 76) for coupling each of said valve sections (62) to said output member (17a); and a position indicator (51—56) for indicating the operating positions (a—f or f—a) of said output member (17a).

2. Apparatus as claimed in claim 1 characterised in that only two said hydraulic lines are used for the control of the apparatus, and the position indicator (51—56) is connected to one (35) of said hydraulic lines to couple a position indicating signal from said position indicator (51—56) to said control centre.

3. Apparatus as claimed in claim 1 characterised in that said position indicator (51—56) is connected to said actuator output member.

4. Apparatus as claimed in claim 1 characterised in that said position indicator includes a plurality of hydraulic relief valves (51—56) connected to one (24) of said valve sections.

5. Apparatus as claimed in claim 2 characterised in that the position indicator is operable to indicate the rotary position of said actuator by coupling a position indicating signal from said one valve section through one of said hydraulic lines to said surface control centre.

6. Apparatus as claimed in claim 1 characterised in that each of said valve sections is removable and replaceable without disconnecting the other valve sections.

7. Apparatus as claimed in claim 1 characterised in that the means (192, 193) for automatically reversing the direction of rotation are operable upon completion of a predetermined number of steps of rotation of the actuator output member (161 or 176) in each of two opposite directions.

## Revendications

1. Appareil pour télécommander un ensemble d'organes de manoeuvre sous-marins actionnés hydrauliquement (36, 37, 41—43, 48) selon une séquence de fonctionnement prédéterminée au moyen d'un petit nombre de conduites hydrauliques (28, 35) entre un centre de commande en surface (13) et un dispositif sous-marin (12) contenant les organes de manoeuvre, l'appareil de télécommande comprenant un ensemble d'organes de distribution (18—24) comportant des parties tournantes (62) et un vérin (17) de commande de distributeur destiné à faire tourner lesdites parties et à relier séquentiellement les conduites hydrauliques aux organes de manoeuvre, caractérisé en ce que le vérin (17) comporte un élément d'entrée mobile axialement (137, 143) et un élément de sortie tournant (161, 17a, ou 176, 17a), l'élément de sortie étant susceptible d'être tourné par l'élément d'entrée à des positions de travail distinctes (a—f, ou f—a); des moyens (112, 138, 143a, 162a—f, 174, 175 ou 137a, 157) pour faire tourner l'élément de sortie (161, 17a) dans un premier sens (le sens ou le sens contraire des aiguilles d'une montre) en réponse à un mouvement axial (A) de l'élément d'entrée (137, 143a), l'élément de sortie (161, 17a) s'arrêtant à au moins deux des positions de travail (a—f) (par exemple à 60 degrés dans le sens des aiguilles d'une montre et à 60 degrés dans le sens contraire des aiguilles d'une montre); des moyens (112, 138, 143b, 180a—f, 186, 187 ou 137a, 157) pour faire tourner l'élément de sortie (176, 17a) dans un second sens (le sens contraire ou le sens des aiguilles d'une montre) en réponse à un mouvement axial (A) de l'élément d'entrée (137, 143b), l'élément de sortie (176, 17a) s'arrêtant au moins à deux des positions de travail (f—a) (par exemple à 60 degrés dans le sens contraire des aiguilles d'une montre et à 60 degrés dans le sens des aiguilles d'une montre); des moyens (192, 145, 150, 144, 193) pour inverser automatiquement le sens de rotation de l'élément de sortie (161, 17a ou 176, 17a) quand celui-ci a passé un nombre prédéterminé de positions de travail; des moyens (170, 123, 188a—e, 174, 175 ou 182, 123, 188e—a, 186, 187) pour faire avancer l'élément de sortie d'une position de travail en réponse au mouvement axial (A) de l'élément d'entrée (137, 143a ou 137, 143b); des moyens (194, 18a, 213, 213a, 79, 76) pour accoupler chacune des parties tournantes (62) des organes de distribution à l'élement de sortie (17a); et un indicateur de position (51—56) pour indiquer les positions de travail (a—f ou f—a) de l'élément de sortie (17a).

2. Appareil selon la revendication 1, caractérisé en ce que deux conduites hydrauliques sont seulement utilisées pour la commande du dispositif et en ce que l'indicateur de position (51—56) est relié à l'une (35) de ces conduites pour transmettre un signal d'indication de position dudit indicateur de position (51—56) au centre de commande.

3. Appareil selon la revendication 1, caractérisé en ce que l'indicateur de position (51—56) est relié à l'élément de sortie du vérin.

4. Appareil selon la revendication 1, caractérisé en ce que l'indicateur de position comprend un ensemble de soupapes de sûreté (51—56) raccordées à l'un (24) des organes de distribution.

5. Appareil selon la revendication 2, caractérisé en ce que l'indicateur de position indique la position de rotation du vérin en transmettant un signal d'indication de position dudit organe de distribution au centre de commande en surface par l'intermédiaire d'une des conduites hydrauliques.

6. Appareil selon la revendication 1, caractérisé en ce que chacun des organes de distribution peut être retiré et remplacé sans démonter les autres organes de distribution.

7. Appareil selon la revendication 1, caractérisé en ce que les moyens (192, 193) pour inverser automatiquement le sens de rotation entrent en action après un nombre prédéterminé de pas de rotation de l'élément de sortie (161 ou 176) du vérin dans chacun des deux sens opposés.

**Patentansprüche**

1. Einrichtung für die Fernsteuerung einer Vielzahl hydraulisch betriebener Unterwasservorrichtungen (36, 37, 41—43, 48), welche in vorbestimmter Arbeitsabfolge durch eine kleine Anzahl hydraulischer Leitungen (28, 35) zwischen einem Oberflächensteuerungszentrum (13) und einer Unterwassereinrichtung (12), enthaltend die hydraulisch betriebenen Unterwasservorrichtungen, betrieben werden, wobei eine Vielzahl von Ventilen (18—24) mit drehbaren Ventilabschnitten (62) und ein Ventilaktuator (17) zum Drehen der Abschnitte sowie sequentiellen verbinden der Hydraulikleitungen mit den Einrichtungen vorhanden ist, dadurch gekennzeichnet, daß der Ventilaktuator in axialer Richtung bewegbare Eingangsglieder (137, 143) und ein drehbares Ausgangsglied (161, 17a oder 176, 17a) aufweist, wobei das Ausgangsglied über das Eingangsglied in eine Vielzahl bestimmter Arbeitsstellungen (a—f oder f—a) drehbar ist; Einrichtungen (112, 138, 143a, 162a—f, 174, 175 oder 137a, 157) zum Bewegen des Ausgangsgliedes (161, 17a) in eine erste Drehrichtung (im Uhrzeigersinn oder entgegengesetzt) in Reaktion auf eine axiale Bewegung (A) des Eingangsgliedes (137, 143a) wobei das Ausgangsglied (161, 17a) an mindestens zwei (z.B. 60° im Uhrzeigersinn und 60° entgegengesetzt) der Arbeits stellungen (a—f) anhaltbar ist; Einrichtungen (112, 138, 143b, 180a—f, 186, 187 oder 137a, 157) zum Bewegen des Ausgangsglieds (176, 17a) in eine zweite Drehrichtung (entgegengesetzt dem Uhrzeigersinn oder umgekehrt) in Reaktion auf eine axiale Bewegung (A) des Eingangsgliedes (137, 143b), wobei das Ausgangsglied (176, 17a) an mindestens zwei (z.B. 60° entgegengesetzt dem Uhrzeigersinn und 60° entgegengesetzt) der Arbeitsstellungen (f—a) anhaltbar ist; Einrichtungen (192, 145, 150, 144, 193) zur automatischen Umkehr der Drehbewegungsrichtung der Ausgangsglieder (161, 17a oder 176, 17a) wenn das Ausgangsglied durch eine vorbestimmte Anzahl von Arbeitsstellungen sich bewegt hat; Einrichtungen (170, 123, 188e—e, 174, 175 oder 182, 123, 188e—a, 186, 187) zur Inkrementierung des Ausgangsgliedes mittels eines aus der Vielzahl der bestimmten Arbeitsstellungen in Reaktion auf die axiale Bewegung (A) des Eingangsgliedes (137, 143a oder 137, 143b); Einrichtungen (194, 18a, 213, 213a, 79, 76) zum Verbinden jeden der Ventilbereiche (62) mit dem Ausgangsglied (17a); und einen Stellungsanzeiger (51—56) zur Anzeige der Arbeitsstellungen (a—f oder f—a) des Ausgangsgliedes (17a).

2. Vorrichtung nach Anspruch 1, dadurch gekennzeichnet, daß lediglich zwei der Hydraulikleitungen für die Steuerung verwendet werden und der Stellungsanzeiger (51—56) zu einer (35) der Hydraulikleitungen angeschlossen ist um ein Stellunganzeigesignal von dem Stellungsanzeiger (51—56) zu dem Steuerungszentrum zu schalten.

3. Vorrichtung nach Anspruch 1, dadurch gekennzeichnet, daß der Stellungsanzeiger (51—56) zu dem Aktuator-Ausgangsglied geschaltet ist.

4. Vorrichtung nach Anspruch 1, dadurch gekennzeichnet, daß der Stellungsanzeiger eine Vielzahl von hydraulischen Freigabeventilen (51—56) enthält, welche mit einem (24) der Ventilbereiche verbunden sind.

5. Vorrichtung nach Anspruch 2, dadurch gekennzeichnet, daß der Stellungsanzeiger die Drehstellung des Aktuators anzeigt indem ein Stellungsanzeigesignal von einer der Ventilbereiche über eine hydraulische Leitung zu dem Oberflächensteuerungszentrum geschaltet wird.

6. Vorrichtung nach Anspruch 1, dadurch gekennzeichnet, daß jeder der Ventilbereiche entfernbar ist ohne daß die anderen Ventilbereiche abgeschaltet werden.

7. Vorrichtung nach Anspruch 1, dadurch gekennzeichnet, daß die Einrichtung (192, 193) zum automatischen Umkehren der Drehbewegung nach einer vorgegebenen Anzahl von Schritten der Drehung der Aktuator-Ausgangsglieder (161 oder 176) in jede der entgegengesetzten Richtungen aktivierbar ist.

FIG_1

0 023 012

FIG_2

2

FIG_6

FIG_4

FIG_7

FIG_3

FIG_5

**TYPE 1**

| VALVE POSITION | ROTOR START POSITIONS | | | | | |
|---|---|---|---|---|---|---|
| | A | F | E | D | C | B |
| AI | - | - | - | - | - | - |
| 1 | P | - | - | - | - | - |
| 2 | - | P | - | - | - | - |
| 3 | - | - | P | - | - | - |
| 4 | - | - | - | P | - | - |
| 5 | - | - | - | - | P | - |
| 6 | - | - | - | - | - | P |

**TYPE 2**

| VALVE POSITION | ROTOR START POSITIONS | | | | | |
|---|---|---|---|---|---|---|
| | A | F | E | D | C | B |
| AI | - | - | - | - | - | - |
| 1 | P | - | P | P | P | P |
| 2 | P | P | - | P | P | P |
| 3 | P | P | P | - | P | P |
| 4 | P | P | P | P | - | P |
| 5 | P | P | P | P | P | - |
| 6 | - | P | P | P | P | P |

**TYPE 3**

| VALVE POSITION | ROTOR START POSITIONS | | | | | |
|---|---|---|---|---|---|---|
| | A | F | E | D | C | B |
| AI | - | - | - | - | - | - |
| 1 | P | - | - | - | - | P |
| 2 | P | P | - | - | - | - |
| 3 | - | P | P | - | - | - |
| 4 | - | - | P | P | - | - |
| 5 | - | - | - | P | P | - |
| 6 | - | - | - | - | P | P |

**TYPE 4**

| VALVE POSITION | ROTOR START POSITIONS | | | | | |
|---|---|---|---|---|---|---|
| | A | F | E | D | C | B |
| AI | - | - | - | - | - | - |
| 1 | P | - | - | - | P | P |
| 2 | P | P | - | - | - | P |
| 3 | P | P | P | - | - | - |
| 4 | - | P | P | P | - | - |
| 5 | - | - | P | P | P | - |
| 6 | - | - | - | P | P | P |

**TYPE 5**

| VALVE POSITION | ROTOR START POSITIONS | | | | | |
|---|---|---|---|---|---|---|
| | A | F | E | D | C | B |
| AI | - | - | - | - | - | - |
| 1 | P | - | - | - | P | - |
| 2 | - | P | - | - | - | P |
| 3 | P | - | P | - | - | - |
| 4 | - | P | - | P | - | - |
| 5 | - | - | P | - | P | - |
| 6 | - | - | - | P | - | P |

**TYPE 6**

| VALVE POSITION | ROTOR START POSITIONS | | | | | |
|---|---|---|---|---|---|---|
| | A | F | E | D | C | B |
| AI | - | - | - | - | - | - |
| 1 | P | - | P | - | P | - |
| 2 | - | P | - | P | - | P |
| 3 | P | - | P | - | P | - |
| 4 | - | P | - | P | - | P |
| 5 | P | - | P | - | P | - |
| 6 | - | P | - | P | - | P |

FIG_8A

**TYPE 7**

| VALVE POSITION | ROTOR START POSITIONS | | | | | |
|---|---|---|---|---|---|---|
| | A | F | E | D | C | B |
| A| | - | - | - | - | - | - |
| 1 | P | - | - | P | - | - |
| 2 | - | P | - | - | P | - |
| 3 | - | - | P | - | - | P |
| 4 | P | - | - | P | - | - |
| 5 | - | P | - | - | P | - |
| 6 | - | - | P | - | - | P |

START POSITION → A

**TYPE 8**

| VALVE POSITION | ROTOR START POSITIONS | | | | | |
|---|---|---|---|---|---|---|
| | A | F | E | D | C | B |
| A| | - | - | - | - | - | - |
| 1 | P | - | P | P | - | - |
| 2 | - | P | - | P | P | - |
| 3 | - | - | P | - | P | P |
| 4 | P | - | - | P | - | P |
| 5 | P | P | - | - | P | - |
| 6 | - | P | P | - | - | P |

START POSITION → A

**TYPE 9**

| VALVE POSITION | ROTOR START POSITIONS | | | | | |
|---|---|---|---|---|---|---|
| | A | F | E | D | C | B |
| A| | - | - | - | - | - | - |
| 1 | P | P | - | P | - | - |
| 2 | - | P | P | - | P | - |
| 3 | - | - | P | P | - | P |
| 4 | P | - | - | P | P | - |
| 5 | - | P | - | - | P | P |
| 6 | P | - | P | - | - | P |

START POSITION → A

**TYPE 10**

| VALVE POSITION | ROTOR START POSITIONS | | | | | |
|---|---|---|---|---|---|---|
| | A | F | E | D | C | B |
| A| | - | - | - | - | - | - |
| 1 | P | - | - | P | P | P |
| 2 | P | P | - | - | P | P |
| 3 | P | P | P | - | - | P |
| 4 | P | P | P | P | - | - |
| 5 | - | P | P | P | P | - |
| 6 | - | - | P | P | P | P |

START POSITION → A

**TYPE 11**

| VALVE POSITION | ROTOR START POSITIONS | | | | | |
|---|---|---|---|---|---|---|
| | A | F | E | D | C | B |
| A| | - | - | - | - | - | - |
| 1 | P | - | P | P | P | - |
| 2 | - | P | - | P | P | P |
| 3 | P | - | P | - | P | P |
| 4 | P | P | - | P | - | P |
| 5 | P | P | P | - | P | - |
| 6 | - | P | P | P | - | P |

START POSITION → A

**TYPE 12**

| VALVE POSITION | ROTOR START POSITIONS | | | | | |
|---|---|---|---|---|---|---|
| | A | F | E | D | C | B |
| A| | - | - | - | - | - | - |
| 1 | P | - | P | P | - | P |
| 2 | P | P | - | P | P | - |
| 3 | - | P | P | - | P | P |
| 4 | P | - | P | P | - | P |
| 5 | P | P | - | P | P | - |
| 6 | - | P | P | - | P | P |

START POSITION → A

FIG. 8B

FIG_9

FIG_10

FIG_11

FIG_12

# FIG_13

| | | PRODUCTION MASTERS -42,43 | PRODUCTION WING -36 | SCSSV-37 | ANNULUS MASTER-47 | ANNULUS WING -48 | CROSSOVER-41 |
|---|---|---|---|---|---|---|---|
| 0 | SHUT-IN/ PIG FLOWLINE | C | C | C | C | C | O |
| 1 | TEST MASTER VALVE | C | O | O | C | C | C |
| 2 | TEST SCSSV | O | O | C | C | C | C |
| 3 | CLOSE MASTER VALVE AND TEST ANNULUS | C | C | C | O | O | C |
| 4 | OPEN SCSSV | O | C | O | O | O | C |
| 5 | PRODUCTION | O | O | O | O | O | C |
| 6 | PRODUCTION THRU ANNULUS LINE | O | O | O | C | C | O |
| | VALVE TYPE | 11 | 10 | 10 | 4 | 4 | 2 |

OPERATING STEPS

## FIG_14

## FIG_15

# FIG_16